# EUROPEAN PATENT APPLICATION

(11) **EP 1 562 156 A2**
(43) Date of publication of application: **10.08.2005**
(21) Application number: 05380019.9
(22) Date of filing: 04.02.2005
(51) Int. Cl.: G07F 7/04, G07F 9/02

(54) **Automatic dispensing machine with multifunction screen**

(30) Priority: 09.02.2004 ES 200400281
(71) Applicant: JOFEMAR, S.A., 31350 Peralta (Navarra) (ES)
(72) Inventor: Guindulain Vidondo, Félix, 31350 Peralta (Navarra) (ES)
(74) Representative: Ungria Lopez, Javier

(57) **Abstract**

Automatic dispensing machine with multifunction screen, the automatic dispensing machine being of the type which function by means of introducing coins and being suitable for incorporating a mouth for introducing bank-notes, and being provided with the corresponding control and function mechanisms, such that the dispensing machine (1) includes in the front of its hinged door a multifunction tactile screen (2), certain means (3) associated with the tactile screen (2) for changing its function and certain loudspeakers (4) in its interior, along with certain electronic means (6) of control, function and programming of the multifunction screen.

## Description

### OBJECT OF THE INVENTION

As stated in the title of this specification, the following invention concerns an automatic dispensing machine with multifunction screen, the automatic dispensing machine being of the type which function by means of introducing coins, being suitable for incorporating a mouth for introducing bank-notes, such that the front of the machine includes a multifunction tactile screen, certain means associated with the tactile screen and certain loudspeakers, likewise incorporating certain electronic means of control, function and programming of the multifunction screen.

So, the multifunction screen presents an advertising function and a selection function, associated with certain means for changing its function, such that the different programmed advertisements are displayed in the advertising function and the different products to be selected by tactile actuation are displayed in the selection function.

Likewise, the dispensing machine incorporates certain electronic means of control and programming of the multifunction screen.

### FIELD OF THE INVENTION

This specification describes an automatic dispensing machine with multifunction screen, having application in all those automatic dispensing machines of the type which function by means of introducing coins and which are suitable for incorporating a mouth for introducing bank-notes, having special application in automatic cigarette dispensing machines.

### BACKGROUND OF THE INVENTION

As is known, there exists a wide variety of automatic dispensing machines on the market functioning by means of introducing coins and which are suitable for incorporating a mouth for introducing bank-notes, for which they incorporate the corresponding function and control mechanisms.

So, in general, automatic dispensing machines present a mouth for introducing coins, being suitable for incorporating a mouth for introducing bank-notes, and including the corresponding validation mechanisms. They furthermore incorporate a collection box for returned coins, either due to their being validated as not good or as return of change.

Moreover, the automatic dispensing machines present a plurality of mechanical push-buttons for selection related to respective products in order to materialise their extraction and a display where the amount introduced into the machine appears.

Furthermore, in the front of the dispensing machines, generally consisting of a hinged door, there is a display panel covering a considerable surface area of the front door, with an internally illuminated image as an advertising object.

### DESCRIPTION OF THE INVENTION

The present invention concerns an automatic dispensing machine with multifunction screen, the automatic dispensing machine being of the type which function by means of introducing coins and being suitable for incorporating a mouth for introducing bank-notes, and being provided with the corresponding control and function mechanisms, such that the dispensing machine includes in the front of its hinged door a multifunction tactile screen, certain means associated with the tactile screen for changing its function and certain loudspeakers in its interior, along with certain electronic means of control, function and programming of the multifunction screen.

The means associated with the tactile screen in order to change its function are defined by at least one proximity sensor, being able to be defined by other means.

The tactile screen presents a first advertising function and a second function of selection in which are represented the different products to select, such that when the machine is not being used its advertising function will be able to display very different advertising information which, in addition to visual messages, will permit information and advertising in sound to be provided via its loudspeakers.

Moreover, the multifunction tactile screen associated with the proximity sensors passes from its first advertising function to its selection function when the proximity sensors detect the approach of a person, with the tactile screen presenting the different products for effecting their selection.

Once the machine has dispensed the corresponding selected product, the screen will then change to its first advertising function.

Moreover, the dispensing machine displays certain electronic means of control and programming of the multifunction screen, by means of which the different advertising announcements will be programmed. To achieve this, the electronic means will be based on an electronic card, a hard disk, etc., in other words, certain means similar to a computer.

In order to complement the description that is going to be made forthwith, and with the aim of aiding a better understanding of the features of the invention, this specification is accompanied by a set of drawings whose figures, by way of illustration only and not limiting, represent the most characteristic details of the invention.

### BRIEF DESCRIPTION OF THE DRAWINGS

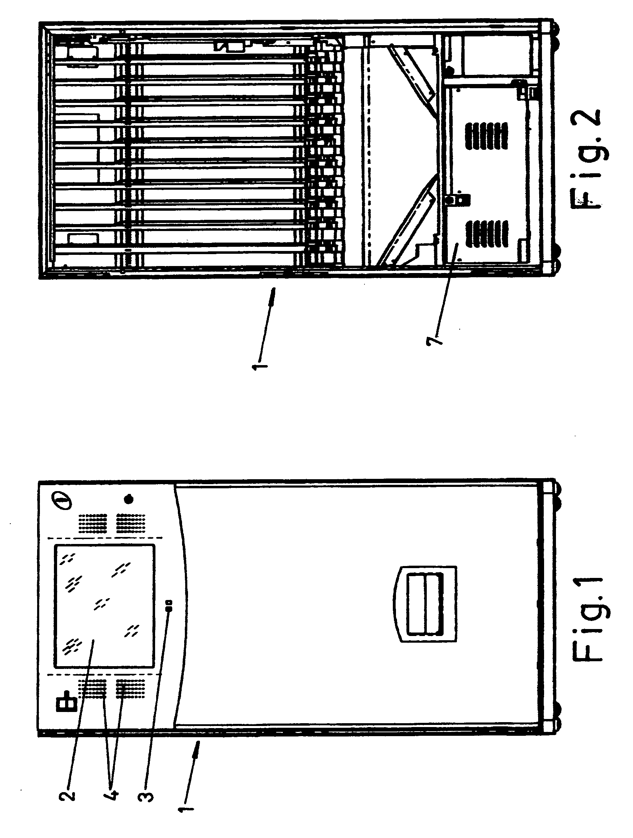

Figure 1 shows a front view of a dispensing machine, where it can be seen how it is provided with a multifunction screen in its central upper part.
Figure 2 shows a front view of the dispensing machine of the previous figure, where its interior can be seen with the lower access cover to the electronic means of control, function and programming of the multifunction screen.

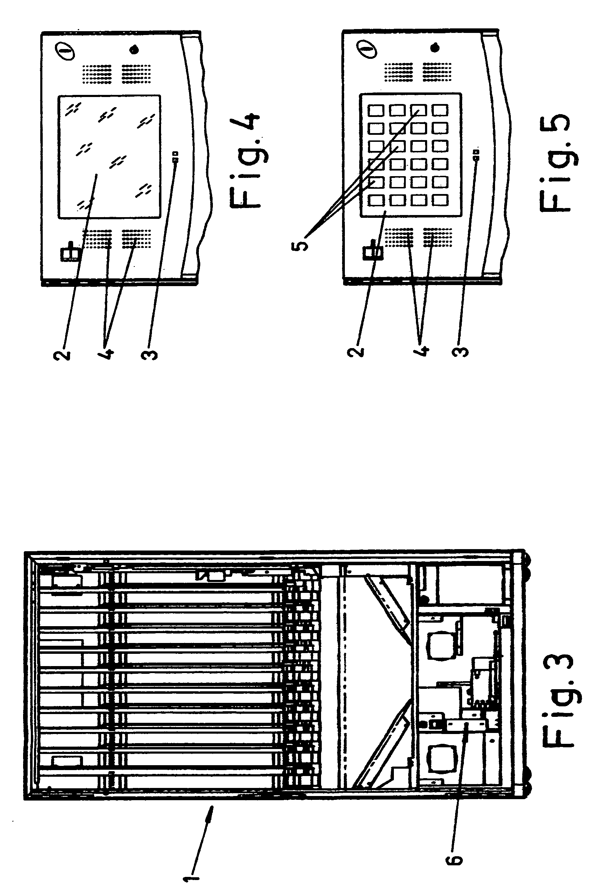

Figure 3 shows a front view of the dispensing machine of the previous figure, where the lower access cover to the electronic means, equivalent to a computer, of control, function and programming of the multifunction screen has been removed.
Figure 4 shows a front view in detail of the upper part of the dispensing machine, where the tactile screen can be seen in its advertising function, along with certain proximity sensors and the representation of some internal loudspeakers.
Figure 5 shows a front view in detail of the upper part of the dispensing machine, where the tactile screen can be seen in its selection function, representing the different products, along with certain proximity sensors and the representation of some internal loudspeakers.

### DESCRIPTION OF AN EMBODIMENT OF THE INVENTION

In view of the said figures and in accordance with the numbering adopted, we can see how the dispensing machine 1, which presents a general shape of the conventional type, contains in the front of its hinged door a multifunction tactile screen 2, certain means 3 associated with the tactile screen 2 for changing its function and some loudspeakers 4 in its interior.

So, the means 3 associated with the tactile screen 2 for changing its function are defined by least one proximity sensor 3. Likewise, the means 3 associated with the tactile screen 2 for changing its function will be able to be materialised not just by some sensors 3 but also by other means, such as by effecting the introduction of a coin.

In this way, the tactile screen 2 presents a first advertising function and a second function of selection of the product in which the different products to select are represented such that in its advertising function the machine will be able to display very different advertising announcement in vision and sound due to the incorporation of some loudspeakers 4.

The multifunction tactile screen 2 associated with the proximity sensors 3 changes from its first advertising function to its second function of product selection when the proximity sensors 3 detect the approach of a person, with the different products 5 to select appearing on the tactile screen 2. Logically, the representation of the different products 5 on the tactile screen 2 will be able to be done in different ways and so this will be able to be carried out by means of their physical representation, their brand, etc.

Moreover, the dispensing machine 1 incorporates an electronic means 6 of control, function and programming of the tactile screen 2, which are similar to a computer due to containing a hard disk, electronic card, etc., by means of which the programming of the multifunction screen is carried out in the presentation of the visual and/or sound announcements.

Said electronic means 6 are to be found fitted in the lower part of the machine housing, being protected by an access cover 7 to them, permitting programming of the advertisements in line with the advertising function of the dispensing machine.

## Claims

1. AUTOMATIC DISPENSING MACHINE WITH MULTIFUNCTION SCREEN, the automatic dispensing machine functioning by means of introducing coins and being suitable for incorporating a mouth for introducing bank-notes, and being provided with control and function mechanisms, **characterised in that** the dispensing machine (1) comprises a multifunction tactile screen (2) in its hinged door front, means (3) associated to the tactile screen (2) for changing its function and loudspeakers (4) in its interior, and electronic means (6) for controlling, functioning and programming the multifunction screen.

2. AUTOMATIC DISPENSING MACHINE WITH MULTIFUNCTION SCREEN, according to claim 1, **characterised in that** the means (3) associated to the tactile screen (2) for changing its function comprise at least one proximity sensor (3).

3. AUTOMATIC DISPENSING MACHINE WITH MULTIFUNCTION SCREEN, according to claim 1, **characterised in that** the tactile screen (2) presents a first advertising function and a second selection function in which different products (5) to select are represented.

4. AUTOMATIC DISPENSING MACHINE WITH MULTIFUNCTION SCREEN, according to the preceding claims, **characterised in that** the multifunction tactile screen (2) associated to proximity sensors (3) changes from its first advertising function to its second selection function when the at least one proximity sensor (3) detect the approach of a person.
